# EUROPEAN PATENT APPLICATION

(11) **EP 0 693 836 A1**
(43) Date of publication of application: **24.01.1996**
(21) Application number: 94306836.1
(22) Date of filing: 19.09.1994
(51) Int. Cl.: H04L 9/30, H04L 9/08, H04L 29/06

(54) **Method and apparatus for a key-management scheme for internet protocols.**

(30) Priority: 10.06.1994 US 258272; 10.06.1994 US 258344
(71) Applicant: SUN MICROSYSTEMS, INC., Mountain View, CA 94043 (US)
(72) Inventor: Aziz, Ashar, Fremont, California 94555 (US)
(74) Representative: Wombwell, Francis

(57) **Abstract**

A first data processing device (node I) is coupled to a private network which is in turn coupled to the Internet. A second data processing device (node J) is coupled to the same, or to a different network, which is also coupled to the Internet, such that node I communicates to node J using the Internet protocol. Node I is provided with a secret value i, and a public value αi mod p. Node J is provided with a secret value j, and a public value αj mod p. Data packets (referred to as "datagrams") are encrypted to enhance network security. A source node I obtains a Diffie-Helman (DH) certificate for node J, and obtains node J's public value αj mod p from the DH certificate. Node I then computes the value of α^{ij} mod p, and derives a key Kᵢⱼ from the value αij mod p. A transient key Kₚ is then generated at random, and Kₚ is used to encrypt the datagram to be sent by node I. Kₚ is then encrypted with key Kᵢⱼ. Upon receipt of the encrypted datagram by the receiving node J, the node J obtains a DH certificate for node I, and obtains the public value αi mod p.

## Description

### BACKGROUND OF THE INVENTION

### 1. Field of the Invention:

The present invention relates to the field of key management schemes, and more particularly, the present invention relates to a key management scheme for Internet working protocols to provide additional security at the network layer.

### 2. Art Background:

The Internet comprises a spiderweb of connected networks which criss-cross the globe and permit users to send and receive data packets between computers. Although many of the computers coupled to the Internet are disposed at fixed locations, portable computer systems may be physically moved from one location on a network to another. Wireless links coupling the computers to the Internet, including direct satellite links, also allow users to access the Internet from remote areas. As a result of the dramatic increase in the use of the Internet throughout the world, concerns regarding network security naturally arise.

A variety of schemes have been proposed to increase security on the Internet, and a number of these schemes have been adopted. For example, encryption and authentication procedures known as Privacy Enhanced Mail (PEM) provide for enhanced privacy in electronic mail ("e-mail") services over the Internet. Additionally, schemes for utilizing PEM for secure remote user authentication have also been proposed. (See, for example, U.S. Patent Application Serial No. 08/253,802, filed June 3, 1994, entitled "Method and Apparatus for Secure Remote User Authentication in a Public Network", assigned to the Assignee of this patent application, Sun Microsystems, Inc., and hereby incorporated fully by reference.)

However, even if a remote user has been authenticated, there still exists the possibility that an intruder (herein referred to as a "cracker") may mount an active attack to interject himself in data transfers across the Internet. Although a user may incorporate a scheme for secure remote user authentication prior to login, a cracker may sever one of the authenticated parties from the Internet connection, and receive and transmit substitute data packets to the other unwitting party (or potentially to both parties). Once the Internet connection is established, data packets are sent over the network in the clear. For example, a cracker may interject himself between, for example, a user "A" in communication with a user "B" on the Internet, and issue a disconnect command to user A. Upon receipt of the disconnect command from the cracker, user A believes that user B has severed the connection. The cracker may then take over the communication established with user B, such that user B does not know that user A is not sending him data packets. Thus, a number of security issues exist when sending data over the Internet, including a cracker's ability to monitor data packets in the clear and to interject himself in the communication line such that he may receive and send data packets to unwitting users. It is, therefore, advantageous to put authenticity and privacy features at the network layer on the Internet. However, the majority of the privacy and authentication protocols which have been proposed provide session oriented key management schemes. Unfortunately, many of the commonly used network layer protocols (for example IP) are session-less datagram oriented protocols.

The present invention provides a key management scheme that is particularly well suited for use in conjunction with session-less datagram protocols (herein referred to as the "SKIP" scheme), such as the Internet protocols, and the proposed replacement candidates known as Connectionless Network Layer Protocol ("CLNP") and Simple Internet Protocol Polymodal ("SIPP"). The present invention's key management scheme prevents crackers from monitoring the transfer of data in the clear over the Internet by encrypting every data packet.

As will be described, the present invention utilizes the teachings of SKIP for securing traffic at the IP layer, which has advantages over performing security functions at the application or transport layers. The approach of the present invention is to encrypt inter-site traffic at the IP layer using the SKIP scheme, and thereby deny a would be cracker from detecting the source and destination addresses of the communicating nodes. To minimize the impact of providing key-management facilities in every node, the present invention encrypts the IP packets from site firewall to site firewall. Thus, only the firewall servers need to participate in the SKIP scheme. When a firewall receives an IP packet from an interior site node intended for a remote firewall, it encrypts the IP packet and sends it encapsulated in another IP packet destined for the remote firewall. The remote firewall decrypts the encapsulated packet and sends it in the clear to the destination node on the interior side of the remote firewall.

Another common network security requirement is to allow remote users to access the protected network from across the Internet in a secure fashion. As will be described, the present invention accommodates this requirement on top of packet layer encryption, without requiring changes to the various client applications used for remote access across the Internet.

### SUMMARY OF THE INVENTION

The present invention provides a key management scheme that is particularly suited to connectionless datagram protocols, such as the Internet protocol (IP). A first data processing device (node I) is coupled to a private network which is in turn coupled to the Internet. A second data processing device (node J) is coupled to the same, or to a different network, which is also coupled to the Internet, such that node I communicates to node J using the Internet protocol. Node I is provided with a secret value i, and a public value αⁱ mod p. Node J is provided with a secret value j, and a public value α^{j} mod p. Data packets (referred to as "datagrams") are encrypted using the teachings of the present invention to enhance network security. A source node I obtains a Diffie-Helman (DH) certificate for node J (either from a local cache, from a directory service, or directly from node J), and obtains node J's public value α^{j} mod p from the DH certificate. Node I then computes the value of α^{ij} mod p, and derives a key Kᵢⱼ from the value α^{ij} mod p. A transient key Kₚ is generated at random and is used to encrypt the datagram to be sent by node I. The key Kₚ is used for a configurable number of bytes, which is the maximum number of bytes the node will decrypt using Kₚ. Kₚ is then encrypted with key Kᵢⱼ. Upon receipt of the encrypted datagram by the receiving node J, the node J obtains a DH certificate for node I (either from a local cache, from a directory service or directly from node J) and obtains the public value αⁱ mod p. Node J then computes the value of α^{ij} mod p and derives the key Kᵢⱼ. Node J utilizes the key Kᵢⱼ to decrypt the transient key Kₚ, and using the decrypted transient key Kₚ, node J decrypts the datagram packet, thereby resulting in the original data in unencrypted form. Accordingly, both the protocol and computational overhead of the present invention is low, changing packet encrypting keys requires no communication between sending and receiving nodes, and no establishment of a pseudo-session state between the two sides is required. The present invention may also be used in conjunction with datagram multi-cast protocols allowing a single encrypted datagram to be multi-cast to numerous receiving nodes coupled to the Internet.

The present invention further provides an application of the SKIP key management scheme for encryption of Internet Protocol (IP) data packets between site firewalls. In this embodiment, the present invention includes a first data processing device (node I) coupled to a first private network and to a firewall server (FWA). Firewall server FWA is in turn coupled to a public network, such as the Internet. A second data processing device (node J) is coupled to a second private network which is coupled to the Internet through a firewall server (FWB). Node I provides a data packet including IP data and a destination address for the intended receiving computer node J, to firewall FWA. Firewall FWA is provided with a secret value a, and a public value α^{a} mod p. Similarly, firewall FWB is provided with a secret value b and a public value α^{b} mod p. The firewall FWA obtains a Diffie-Hellman (DH) certificate for firewall FWB and determines the public value α^{b} mod p from the DH certificate. Firewall FWA then computes the value of α^{ab} mod p, and derives a key K_{ab} from the value α^{ab} mod p. A transient key Kₚ is generated randomly and is configured for use with a predetermined number of data packets. Kₚ is used to encrypt the data packet to be transmitted by firewall FWA to firewall FWB. The encrypted data packet is then encapsulated in a transmission packet by the firewall FWA. The transmission packet includes an unencrypted destination address for the firewall FWB. Firewall FWA then sends the transmission packet to firewall FWB over the Internet. Upon receipt of the transmission packet from firewall FWA, firewall FWB obtains a DH certificate for firewall FWA, and determines the public value of α^{a} mod p from the DH certificate. Firewall FWB computes the value of α^{ab} mod p, and derives the key K_{ab}. Firewall B utilizes the key K_{ab} to decrypt the transient key Kₚ, and using the decrypted transient key Kₚ, firewall FWB decrypts the encrypted data packet received from FWA, thereby resulting in the recovery of the original data sent by node I in unencrypted form to the firewall FWA. The firewall FWB then transmits the decrypted data packet to the receiving node J over the second private network. Accordingly, data packets sent within each of the private networks coupled are transmitted in an unencrypted form, however, all transmissions of data between firewalls over the Internet are encrypted using the teachings of the present invention prior to transmission. The present invention may also be used in conjunction with a remote user operating with dynamically assigned IP addresses. In the case of a mobile or remote user utilizing a public network address, only the IP data is encrypted utilizing the teachings of the present invention such that the public address and firewall destination addresses are sent in the clear over the Internet.

### BRIEF DESCRIPTION OF THE DRAWINGS

**Figure 1** illustrates a data processing system incorporating the teachings of the present invention.

**Figure 2** diagrammatically illustrates one possible network scheme using the teachings of the invention in an Internet environment.

**Figure 3** illustrates a flow chart of the steps executed in sending an encrypted data packet from a network node I to a network node J, in accordance with the teachings of the present invention.

**Figure 4** is a flow chart of the steps executed for the receipt of encrypted data packets by node J from node I in accordance with the teachings of the present invention.

**Figure 5** diagrammatically illustrates the transmission format of an encrypted datagram.

**Figure 6** diagrammatically illustrates one possible network scheme using the teachings of the invention in an Internet environment.

**Figure 7** is a flow chart illustrating an overview of the steps executed in sending an encrypted data packet between firewalls over the Internet.

**Figure 8** is a flow chart illustrating an overview of the steps executed by a receiving firewall utilizing the teachings of the present invention.

**Figure 9** illustrates a flow chart of the steps executed in sending an encrypted data packet from a firewall (FWA) to a firewall (FWB) over the Internet, in accordance with the teachings of the present invention.

**Figure 10** is a flow chart of the steps executed for the receipt of encrypted data packets by firewall (FWB) from firewall (FWA) in accordance with the teachings of the present invention.

**Figure 11** conceptually illustrates a representative transmission packet including an encrypted encapsulated data packet sent between firewalls over the Internet in accordance with the teachings of the present invention.

**Figure 12** diagrammatically illustrates one possible network scheme utilizing the teachings of the present invention in which a mobile data processing device is temporarily coupled for communication to a private network.

**Figure 13** is a flow chart illustrating the sequence of steps executed by a mobile data processing device with a dynamically assigned address.

**Figure 14** is a flow chart illustrating the sequence of steps executed by a receiving firewall in the case of a mobile IP device utilizing dynamically assigned addressing.

**Figure 15** conceptually illustrates a transmission packet and an encrypted encapsulated data packet in the case where a mobile data processing device communicates to distant nodes through firewalls coupled to the Internet.

### Notation and Nomenclature

The detailed descriptions which follow are presented largely in terms of symbolic representations of operations of data processing devices coupled to a network. These process descriptions and representations are the means used by those skilled in the data processing arts to most effectively convey the substance of their work to others skilled in the art.

An algorithm is here, and generally, conceived to be a self-consistent sequence of steps leading to a desired result. These steps are those requiring physical manipulations of physical quantities. Usually, though not necessarily, these quantities may take the form of electrical or magnetic signals capable of being stored, transferred, combined, compared, displayed and otherwise manipulated. It proves convenient at times, principally for reasons of common usage, to refer to these signals as bits, values, elements, symbols, operations, messages, terms, numbers, or the like. It should be borne in mind, however, that all of these similar terms are to be associated with the appropriate physical quantities and are merely convenient labels applied to these quantities.

In the present invention, the operations referred to are machine operations. Useful machines for performing the operations of the present invention include general purpose digital computers (referred herein as "nodes"), or other similar devices. In all cases, the reader is advised to keep in mind the distinction between the method operations of operating a computer and the method of computation itself. The present invention relates to method steps for operating a computer, coupled to a series of networks, and processing electrical or other physical signals to generate other desired physical signals.

The present invention also relates to apparatus for performing these operations. This apparatus may be specially constructed for the required purposes or it may comprise a general purpose computer selectively activated or reconfigured by a computer program stored in the computer. The method/process steps presented herein are not inherently related to any particular computer or other apparatus. Various general purpose machines may be used with programs in accordance with the teachings herein, or it may prove more convenient to construct specialized apparatus to perform the required method steps. The required structure for a variety of these machines will be apparent from the description given below.

### Detailed Description of the Invention

In the following description, numerous specific details are set forth such as system and network configurations, representative data packets, messages, and devices, etc., to provide a thorough understanding of the present invention. However, it will be apparent to one skilled in the art that the present invention may be practiced without these specific details. In other instances, well known circuits and structures are not described in detail in order to not obscure the present invention. Moreover, certain terms such as "knows", "verifies", "examines", "utilizes", "finds", "determines", "challenges", "authenticates", etc., are used in this Specification and are considered to be terms of art. The use of these terms, which to a casual reader may be considered personifications of computer or electronic systems, refers to the functions of the system as having human-like attributes, for simplicity. For example, a reference herein to an electronic system as "determining" something is simply a shorthand method of describing that the electronic system has been programmed or otherwise modified in accordance with the teachings herein. The reader is cautioned not to confuse the functions described with everyday human attributes. These functions are machine functions in every sense.

### Exemplary Hardware

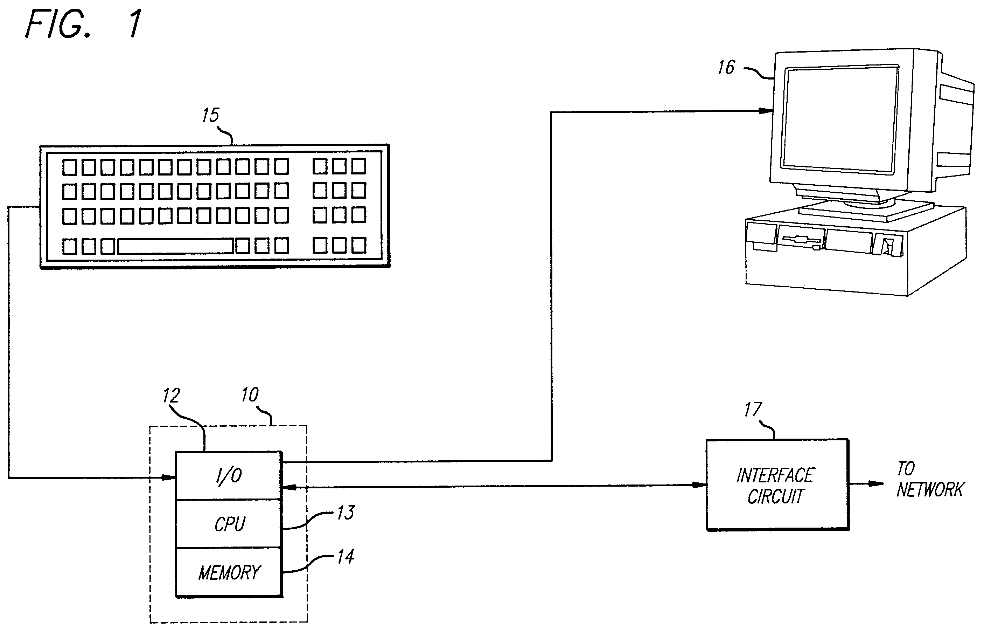

**Figure 1** illustrates a data processing system in accordance with the teachings of the present invention. Shown is a computer 10, which comprises three major components. The first of these is an input/output (I/O) circuit 12 which is used to communicate information in appropriately structured form to and from other portions of the computer 10. In addition, computer 10 includes a central processing (CPU) 13 coupled to the I/O circuit 12 and a memory 14. These elements are those typically found in most general purpose computers and, in fact, computer 10 is intended to be representative of a broad category of data processing devices. Also shown is an interface circuit 17 coupled to the I/O circuit 12 for coupling the computer 10 to a network, in accordance with the teachings herein. The interface circuit 17 may include encrypting and decrypting circuitry incorporating the present invention, or as will be appreciated, the present invention may be implemented in software executed by computer 10. A raster display monitor 16 is shown coupled to the I/O circuit 12 and issued to display images generated by CPU 13 in accordance with the present invention. Any well known variety of cathode ray tube (CRT) or other type of display may be utilized as display 16.

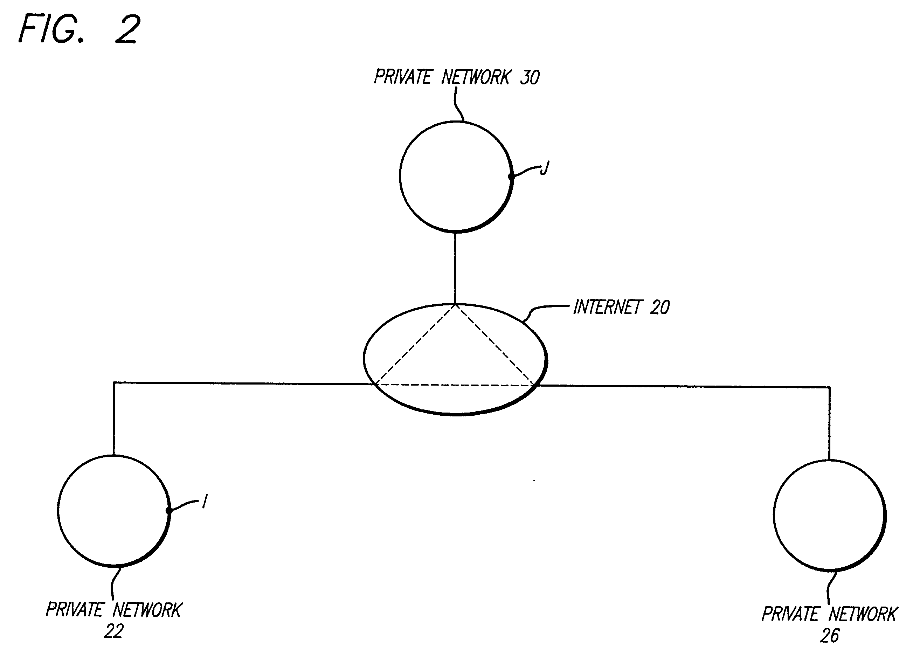

Referring now to **Figure 2**, a simplified diagram conceptually illustrates the Internet 20 coupled to a private network 22, a second private network 26, and a third private network 30. The network topology illustrated in **Figure 2** is representative of the existing Internet topology, however, it will be noted that the present invention provides an improved key management scheme which has application for use in networks other than the Internet.

One of the unique aspects of the Internet system is that messages and data are transmitted through the use of datagram packets. In a datagram-based network, messages are sent from a source to a destination in a similar manner to a government mail system. For example, a source computer may send a datagram packet to a destination computer regardless of whether or not the destination computer is currently on-line and coupled to the network. The Internet protocol (IP) is completely session-less, such that IP datagram packets are not associated with one another.

In this Specification, the present invention will be described with reference to communication between a node I coupled to private network 22, and a node J coupled to the private network 30, as shown in **Figure 2**. The nodes I and J represent computers, such as the computer illustrated in **Figure 1**, coupled to their respective networks. For simplicity and ease of understanding, an operation by, for example, "node I", shall be understood to mean an operation by the computer coupled to network 22.

One way to obtain authenticity and privacy at a datagram layer like IP is to use RSA public key certificates. Traditionally, in the event node I desires to send a datagram to, for example, node J, the node I communicates with node J and authenticates itself using a certificate based key management infrastructure. An example of a certificate based infrastructure key management for secure Internet e-mail is the Privacy Enhanced Mail (PEM) system (see the PEM RFC documents filed concurrent with the Application upon which this patent is based, and incorporated herein by reference, entitled "Privacy Enhancement for Internet Electronic Mail", parts I-IV rfcs 1421-1424, available on the Internet).

The certificates used by PEM are RSA public key certificates. An RSA public key certificate is one which contains an RSA public key. (See, A.Aziz, W.Diffie, "Privacy and Authentication for Wireless LANs", IEEE Personal Communications, February 1994; and also, W.Diffie, M.Wiener, P.Oorschot, "Authentication and Authenticated Key Exchanges".) There are two primary ways in which RSA certificates can be used to provide authenticity and privacy for a datagram protocol. The first way is to use out-of-band establishment of an authenticated session key, using one of several session key establishment protocols. This session key can then be used to encrypt IP data traffic. Such a scheme has the disadvantage of establishing and maintaining a pseudo session state on top of a session-less protocol. The IP source must first communicate with the IP destination to acquire this session key. In addition, when the session key must to be changed to insure security, the IP source and the IP destination need to communicate again to effectuate the change. Each such communication involves the use of a computationally expensive public-key operation. This communication requirement is particularly ill-suited to a datagram protocol like IP, which does not require the receiving computer to be in operation to send packets to it, although to establish and change negotiated session keys the receiving computer must be operational.

The second way an RSA certificate can be used to provide authenticity and privacy in a datagram protocol is to complete in-band signalling of the packet encryption key, such that the packet encryption key is encrypted in the recipient's public key. This is the method PEM utilizes to accomplish message encryption. Although this avoids the session state establishment requirement, and also does not require the two parties to communicate to set up and change packet encryption keys, this scheme has the disadvantage of having to carry the packet encryption key encrypted in the recipient's public key in every packet. Since an RSA encrypted key would minimally need to be 64 bytes, and can be 128 bytes, this scheme incurs the overhead of 64-128 bytes of keying information in every packet. In addition, when the packet encryption key changes, a public key operation would need to be performed to recover the new packet encryption key. Thus, both the protocol and computational overhead of such a scheme is high.

The use of Diffie-Hellman (DH) public-key certificates can avoid the pseudo session state establishment, and the communications requirement between the two communicating computers to acquire and change packet encrypting keys (see, W. Diffie, M.Hellman, "New Directions in Cryptography", IEEE Transactions on Information Theory). Furthermore, the use of a DH public-key certificate does not incur the overhead of carrying 64-128 bytes of keying information in every packet, and is better suited to protocols like IP, since it does not require the receiving computer to be operational to establish and change packet encrypting keys.

### Use of DH Certificate Based Key-Management for Datagram Protocols

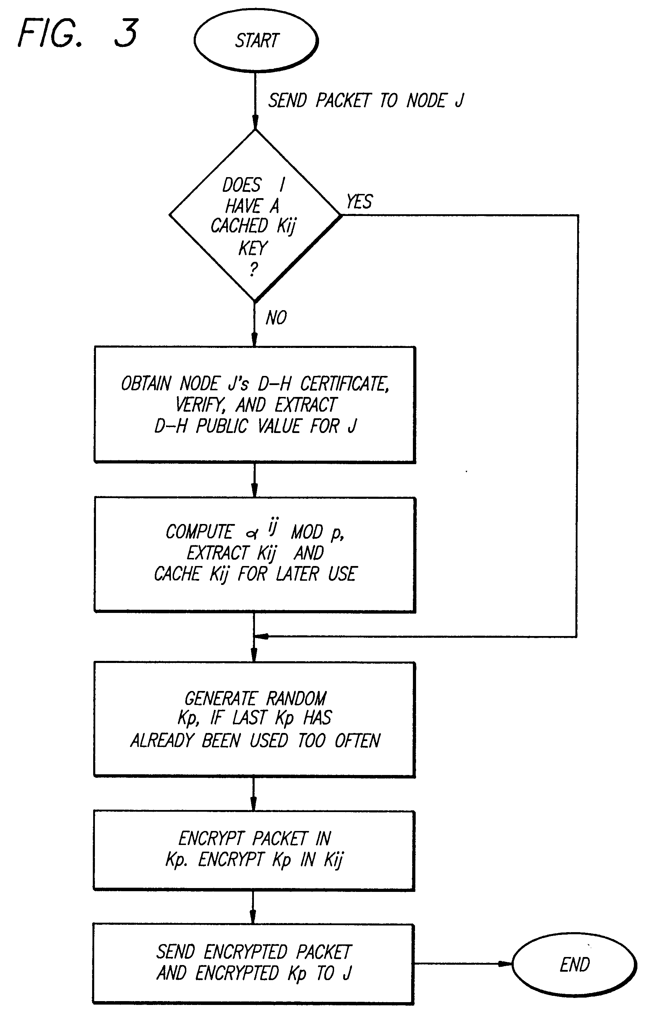

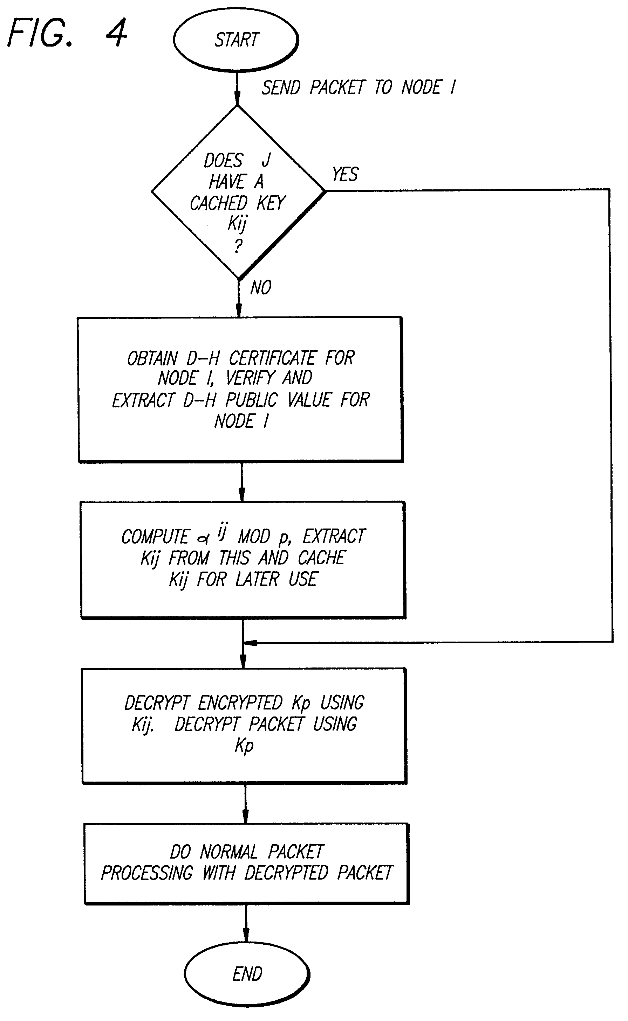

Referring now to the flow charts illustrated in **Figures 3** and **4**, the present invention's SKIP method utilizes DH public-key certificates for key management, such that each IP source and destination is provided with a Diffie-Hellman public key. This DH public-key is distributed in the form of a certificate. The certificate can be signed using either an RSA or DSA signature algorithm. The certificate is referred to herein as a "Diffie-Hellman" (DH) certificate, because the public value that is certified is a Diffie-Hellman public value.

It will be appreciated that the present invention's use of DH certificates to compute a shared key is fundamentally different than the use of the DH certificate to negotiate a session key, for example, as described in the paper by Whitfield Diffie, entitled "Authentication and Authenticated Key Exchanges" (Kluwer Academic Publishers, 1992), because the present invention uses a zero-message protocol to compute a shared secret. All past uses of DH certificates have involved exchanging messages between the two communicating parties.

In accordance with the teachings of the present invention, upon initialization each IP source or destination computer, for example node I, is provided with a secret value i, and computes a public value αⁱ mod p. Similarly, node J is provided with a secret value j, and computes a public value α^{j} mod p. For purposes of illustration, assume that node I wishes to communicate with a node J coupled to private network 30 in **Figure 2**. Both I and J can acquire a shared secret α^{ij} mod p without having to communicate, as long as the public key of each IP node is known to all the other IP nodes. The values α and p are system parameters, where p is a prime number. It will be appreciated by one skilled in the art that local caching of DH certificates can eliminate the constant need for a directory service, thereby minimizing system overhead.

The computable shared secret may be used as a key-encrypting key to provide for IP packet based authentication and encryption. Thus, we denote the value α^{ij} mod p as the "long-term key", and derive from it a key Kᵢⱼ. The key Kᵢⱼ is used as the key for a known shared-key cryptosystem (SKCS) like DES or RC2. It will also be noted that Kᵢⱼ is an *implicit* pair-wise shared secret. Kᵢⱼ does not need to be sent in every packet or negotiated out-of-band. Simply by examining the source of an IP packet, the destination IP node (for example, node J) can compute the shared secret Kᵢⱼ.

The key Kᵢⱼ is derived from α^{ij} mod p by using the low order key-size bits of α^{ij} mod p. Since α^{ij} mod p is minimally at least 512 bits (and for greater security may be 1024 bits or higher), sufficient bits may be derived for use as Kᵢⱼ which is used as a key for the SKCS. Typically, SKCS key sizes are in the range of 40-172 bits.

As illustrated in the flow charts of **Figures 3** and **4**, the SKIP methodology utilizes the key Kᵢⱼ to encrypt a "transient key", which is referred to as Kₚ. The key Kₚ is generated at random to encrypt a configurable number of data packets. After the configurable number of data packets have been sent, a new Kₚ is generated at random. The transient key Kₚ is used to encrypt an IP data packet, or a collection of IP data packets. The encryption using Kₚ limits the amount of data in the long-term key which a potential cracker can access. Since it is desirable to retain the long-term key for a relatively long period of time (one or two years), the actual IP data traffic is not encrypted in key Kᵢⱼ. In the preferred embodiment of the invention, only the transient keys of the long-term key are encrypted using Kᵢⱼ, and the transient keys are used to encrypt IP data traffic. Thus, the amount of data encrypted in the long-term key (Kᵢⱼ) is limited to a relatively small amount over a long period of time.

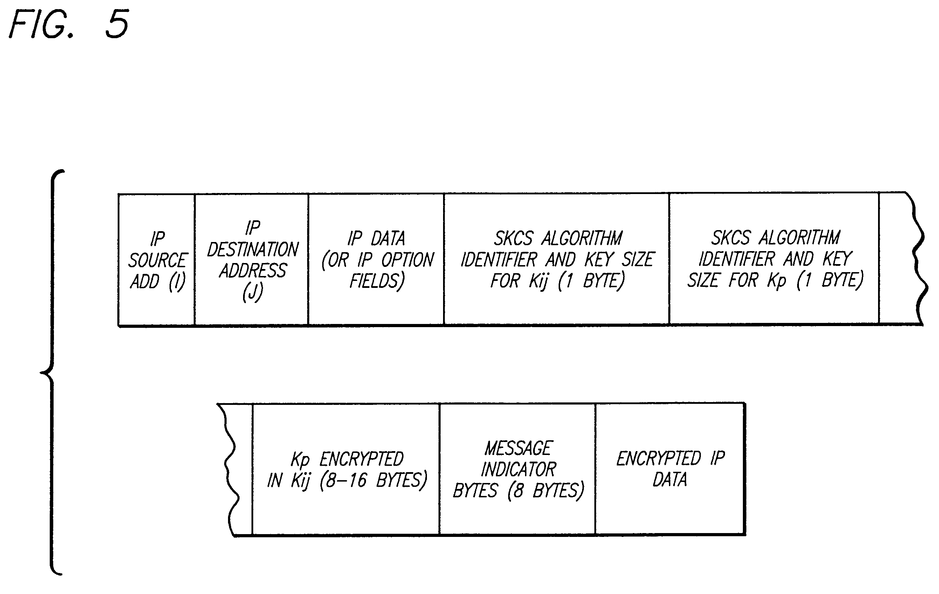

The first time the IP source, such as node I, which has been provided with the secret value i, communicates with the IP node J which has been provided with a secret value j, the node I computes the shared secret α^{ij} mod p. The node I can then cache this shared secret as the long-term key Kᵢⱼ. The node I then generates a random key Kₚ and encrypts this key using Kᵢⱼ. As illustrated in flow chart of **Figure 3**, the node I encrypts the IP packet data in key Kₚ, and transmits the encrypted IP datagram packet and the encrypted key Kₚ. The outgoing datagram packet sent by the source node I takes the form illustrated in **Figure 5**.

It will be appreciated that to prepare the datagram packet illustrated in **Figure 5** for transmission on the outbound side of node I, no communication was necessary with the receiving node J. In addition, since Kᵢⱼ is used as the key for the SKCS, the length of the encrypted key Kₚ is the block size of a shared-key cipher (typically 8 bytes), as opposed to the block size of a public-key cipher (typically 64-128 bytes), which would have been the case if RSA certificates had been used in conjunction with in-band signalling of the packet encryption key.

As shown in **Figure 4**, when node J receives the datagram packet, the node J also computes the shared secret Kᵢⱼ and caches it for later use. Using Kᵢⱼ it obtains Kₚ, and using Kₚ it decrypts the encrypted data which it then delivers to the appropriate local transport entity, or another outbound interface.

The Message Indicator (MI) shown in **Figure 5** is a field that is used to preserve the statelessness of the protocol of the present invention. If a single key is used to encrypt multiple packets, (which is highly desirable since changing the key on a per packet basis constitutes significant computational overhead) then the packets need to be decryptable regardless of lost or out-of-order packets. The MI field serves this purpose. The actual content of the MI field is dependent on the choice of SKCS used for Kₚ and its operating mode. For example, if Kₚ refers to a block cipher (e.g. DES) operating in Cipher-Block-Chaining (CBC) mode, then the MI for the first packet encrypted in key Kₚ is the Initialization Vector (IV). For subsequent packets, the MI is the last blocksize-bits of ciphertext of the last (in transmit order) packet. For DES or RC2 this would be 64 bits. For stream ciphers like RC4, the MI is simply the count of bytes that have already been encrypted in key Kₚ (and may also be 64 bits).

If the source node I decides to change the packet encryption key Kₚ, the receiving node J can discover this fact without having to perform a public-key operation. The receiving node J uses the cached value Kᵢⱼ to decrypt the encrypted packet key Kₚ, and this is a shared-key cryptosystem operation. Thus, without requiring communication between transmitting (I) and receiving (J) ends, and without necessitating the use of a public-key operation, the packet encrypting key can be changed by the transmitting side.

Since DH certificates are used, the nodes I and J have no public-key signature algorithm. It will be appreciated that the lack of a public-key signature algorithm is not a major issue, since signing each packet using a public-key cryptosystem is too cumbersome in any case. In accordance with the present invention, the integrity of the packets is determined in a pairwise fashion using a SKCS.

In order to retain the amount of data encrypted in any given key to be less than 2³² (assuming a 64-bit block cipher) at T1 speeds of 1.5 Mbits/sec, the packet encryption key must change roughly every six hours. This results in the amount of key material encrypted in the long-term key in a year to be roughly 24K bytes, well under the 2³² limit that would necessitate changing the long-term key more frequently than once a year.

It will also be noted that the present invention's key-management scheme does not provide for any level of playback protection. Most of the existing transport protocols deal with playbacks at the datagram layer. For example, TCP does sequencing of IP packets. Therefore it is not necessary to provide for this functionality at the datagram layer. If playback protection is important for a given application, then it would be built on top of the secure datagram protocol. Since the Kᵢⱼ values need to be cached for efficiency, reasonable safeguards need to be taken to protect these keys. One possible way to accomplish caching is to provide a hardware device to compute, store and perform operations using these keys. This device can ensure that there are no interfaces to extract the key from the device. It is contemplated that such a hardware device is incorporated within the CPU block 13 illustrated in **Figure 1**.

The key management described herein may also be used to provide an integrity-only service for later packets. In this case, the key Kᵢⱼ can be used directly by either node I or node J to encrypt a message digest of the packet header or packet header end data. Since the message digest is a small amount of information, there is no need to send or use the transient key Kₚ.

### Datagram Multicast Protocols

The method of the present invention may be used in conjunction with datagram multicasting protocols like IP (or IPng) multicast. However, this will require key-management awareness in the establishment and joining process of multicast groups.

It is contemplated that when secure multicasting to a multicast address (**M**) is required, a group membership creation primitive will establish the secret value, and also provide the public value. For a multicast address **M**, a randomly generated secret value m is created by the group owner and the public value α^{m} mod p is computed. Also associated with each group address **M** is a membership list of addresses that are allowed to transmit and receive encrypted multicast datagrams to and from group address **M**.

The public value is distributed securely to the nodes on the public networks 22, 26 and/or 30, (see **Figure 2**) that wish to transmit to multicast address **M**. This is accomplished by using the pairwise secure datagram protocol of the present invention described above. Thus, nodes wishing to transmit to group address **M** acquire the public value α^{m} mod p from the group owner in a secured datagram from the group owner to the transmitting nodes. The public value α^{m} mod p is distributed in the form of a certificate that is "signed" (using a SKCS) in the long-term pair-wise shared secret. This allows the group creation primitive to establish lifetimes for the transient secret value m and its corresponding public value.

Nodes wishing to receive encrypted datagrams sent to multicast address **M** need to acquire the secret value m. This is accomplished by sending the request to join primitive to the group owner. If the requesting node's address is among those that are part of the group's receive membership, then the group owner will send the secret value m, and the associated public value certificate in an encrypted packet, again using the pairwise secure protocol of the present invention previously described above.

A transmitting node (for example node I) wishing to send to group address **M** will use the value α^{m} mod p to derive the key Kᵢₘ. Transmitting nodes do not need to know the secret value m; all they need to know is the group public value α^{m} mod p, and knowing their own secret value (i), can compute the shared secret α^{im} mod p from which they derive Kᵢₘ. The value Kᵢₘ is then used to encrypt the packet encrypting key Kₚ. Since the receiving nodes know the group secret m, and the public value αⁱ mod p they can also compute Kᵢₘ, and thereby decrypt the packet.

An advantage of the method of the present invention is that only the keying information is distributed in a pairwise fashion. The actual encrypted data packet is sent using the standard multicast delivery mechanisms, thereby allowing the same network bandwidth efficiency that is expected of a network layer multicast protocol when operating over subnetworks which also support multicasting (for example, Ethernet, FDDI, etc). Moreover, how the identity of the group owner is established and communicated to the participating nodes is left to the application layer, although this also needs to be accomplished in a secure fashion, otherwise the underlying key-management facility may be defeated.

The scalability of the present invention's scheme is intended to be limited to a moderate number of nodes, and not an extremely large number of nodes. However, this is not a major limitation, because there is a tradeoff between keeping a value secret and having it be widely distributed.

### Management of DH certificates

Since the nodes' public DH values are communicated in the form of certificates, the same type of multi-tier certification structure that is being deployed for PEM, and also by the European PASSWORD. There may be a Top Level Certifying Authority (TLCA) which may constitute the same the Internet Policy Registration Authority (IPRA), Policy Certifying Authorities (PCAs) at the second tier and the organizational Certificate Authorities (CAs) below that.

In addition to the identity certificates, which are part of PEM, additional authorization certificates are needed to properly track the ownership of IP addresses. Since it is desirable to directly use IP addresses in the DH certificates, name subordination principles alone cannot be used to determine if a particular CA has the authority to bind a particular IP address to a DH public key. However, the present invention may use the X.509/PEM certificate format, since the subject Distinguished Name (DN) in the certificate can be the ASCII decimal representation of an IP (or IPng) address.

In as much as the nodes only have DH public keys, which have no signature capability, the nodes themselves are unable to issue DH certificates. The node certificates are issued by organizational CAs which have jurisdiction over the range of IP addresses that are being certified. The PCAs will have to perform suitable checks (in line with the policy of that PCA), to confirm that the organization which has jurisdiction over a range of addresses is issued a certificate giving it the authority to certify the DH values of individual nodes with those addresses. This authority may be delegated in the form of a authorization certificate signed by the PCA. For the purposes of authorization, the CA's Distinguished Name (DN) will be bound to the range of IP addresses over which it has jurisdiction. The CA has either an RSA or DSA certificate from the PCA. The CA which has authority over a range of IP addresses can delegate authority over part of the range to a subordinate CA, by signing another authorization certificate using its own private key. The organizational CA so authorized is identified by the range of addresses that it can issue certificates for. The range of IP addresses are identified in the certificate in the form of a IP address prefix.

### Application of the Present Invention to Site Firewalls

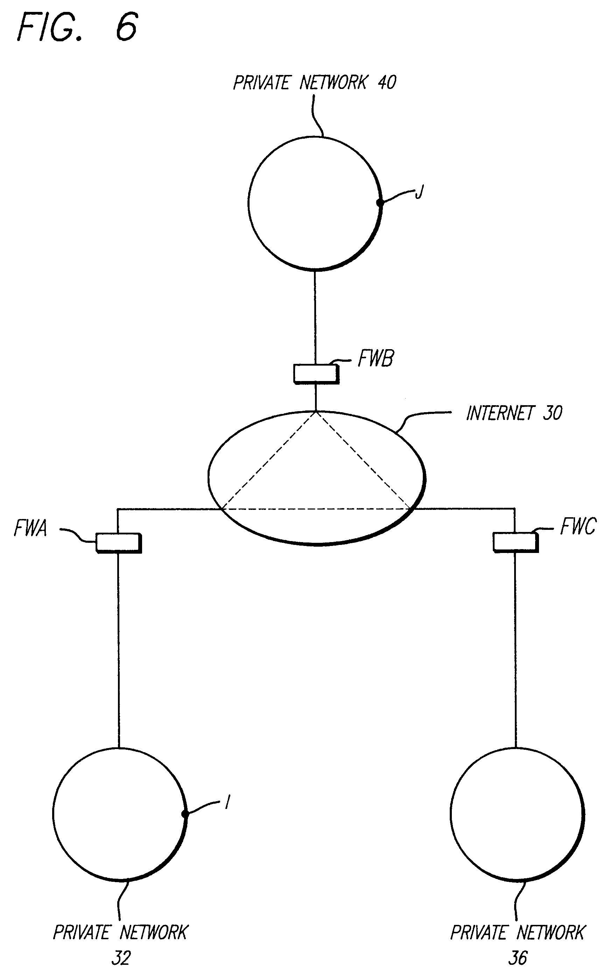

Referring now to **Figure 6**, the application of SKIP to communications between site firewalls will be described. Internet 30 is coupled to a private network 32 through a "firewall" server (FWA). A "firewall" server is a computer which couples the computers of a private network to the Internet 30, and may thus act as a gatekeeper for messages and data going to and from the Internet. A second private network 40 is also coupled for communication with the Internet 30 through a firewall server (FWB). A third private network 36 is coupled through a firewall server (FWC) to the Internet 30. The firewall servers are Internet protocol (IP) server computers which do not generally run application software, but rather encrypt and decrypt datagram traffic sent and received to nodes on the private networks over the Internet 30. The network topology illustrated in **Figure 6** is representative of one Internet topology, however, it will be noted that the present invention provides an improved key management scheme which has application for use in networks other than the Internet.

In this Specification, the present invention is described with reference to communication between firewalls and between nodes. For example, a node I is coupled to private network 32 through the firewall (FWA). A node J coupled to the private network 40 communicates over the Internet through the firewall (FWB), as shown in **Figure 6**. The nodes I and J, and the firewalls (FWA) and (FWB) represent computers, such as the computer illustrated in **Figure 1**, coupled to their respective networks. For simplicity and ease of understanding, an operation by, for example, "node I" or firewall (FWA), shall be understood to mean an operation by the computer coupled to network 32.

Each firewall shown in **Figure 6** is configured to understand which firewall to send data packets to, given a destination IP address. This may be implemented by providing the firewalls with a map of all valid IP addresses disposed on its particular private network or at another location on the Internet. The map may be in the form of prefix matches, up to and including the full IP address.

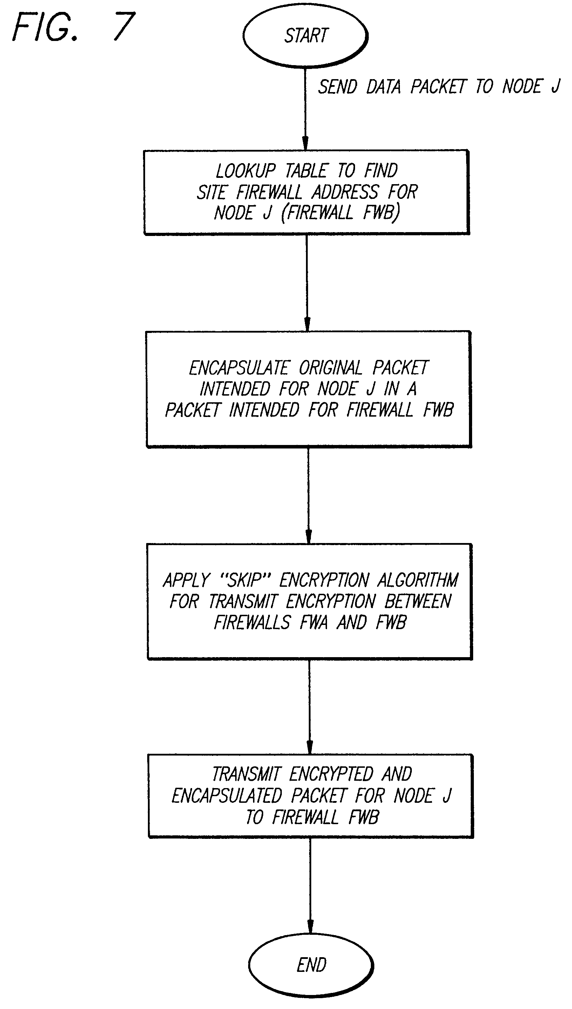

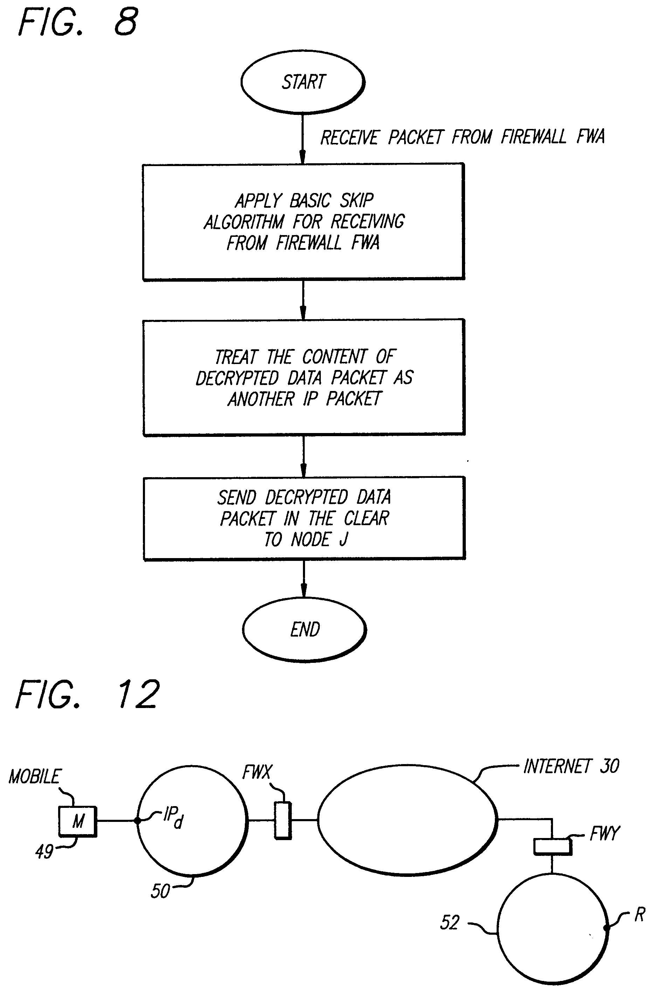

Referring now generally to the flowcharts of **Figures 7** and **8**, utilizing the map a firewall determines whether a data packet is intended for a remote node across the public part of the Internet 30, and if that is the case, the firewall looks up the corresponding IP address of the remote firewall. For example, assume that a node I desires to send a data packet to a node J on private network 40. The firewall FWA first determines that node J is coupled to network 40, and that firewall FWB serves the network 40. Then the firewall FWB encapsulates the original IP data packet (header and data) and transmits the data packet in an encrypted IP packet intended for the remote firewall FWB. As will be described, the encryption is performed using the SKIP pair-wise packet encryption scheme, where the pair is the transmitting and receiving firewalls FWA and FWB. The receiving firewall (FWB) will execute the steps illustrated in **Figure 8** complete the corresponding SKIP decryption. The firewall FWB understands that it has received a tunneled IP packet, and then sends the decrypted data packet in the clear through the interior of the private network 40 to the node J.

The rationale of the present invention for performing secure tunneling, (encapsulating the entire original IP packet), as opposed to simply encrypting the data portion of the IP packet while leaving the original header intact, is that the encryption of the entire IP packet prevents the topology and the number of nodes in the interior network to be discovered by a cracker. All a cracker can determine is that there are certain number of firewalls that communicate with each other. No information about which nodes in the interior networks are communicating on an end-to-end basis, or how many nodes exist in the interior of the private networks is divulged to outside observers.

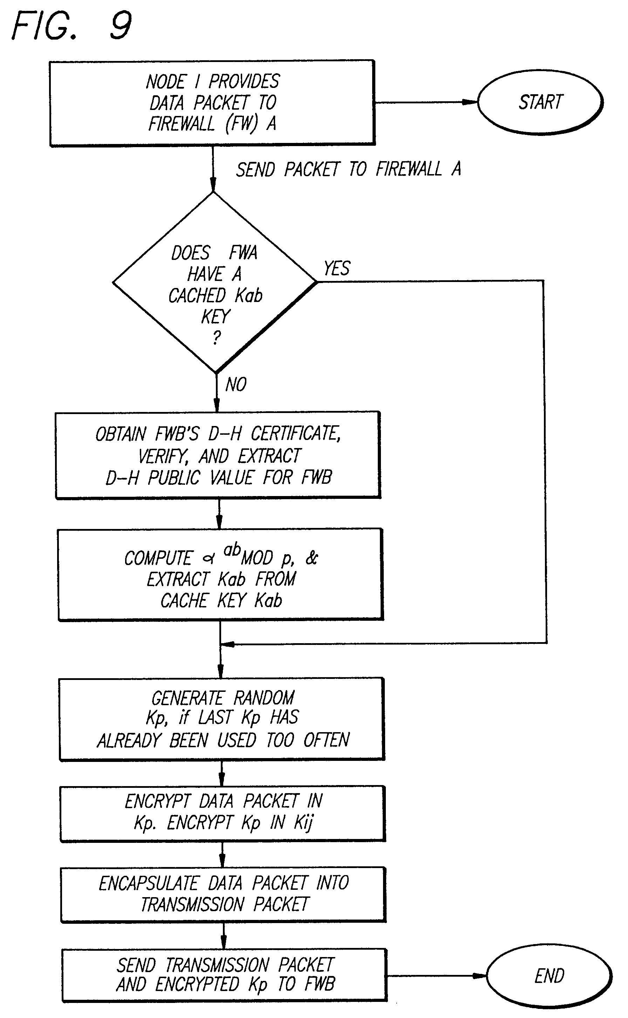

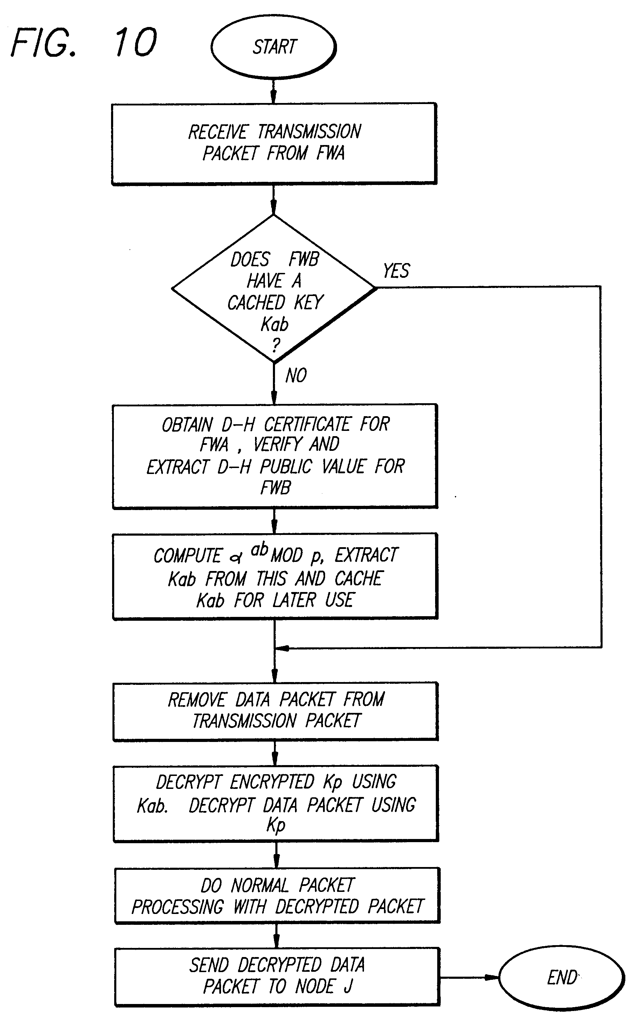

Referring now to the flow charts illustrated in **Figures 9** and **10**, the SKIP protocol is described utilizing DH public-key certificates for key management, such that each IP source and destination firewall is provided with a Diffie-Hellman public key.

The reader is referred to the flow charts of **Figures 9** and **10**, for the detailed steps executed by the sending and receiving firewalls, and to the more general overview flow charts of **Figures 7** and **8**. In this Specification, for purposes of illustration, the present invention is described with reference to node I sending a datagram packet to node J, shown in **Figure 6**. It will be appreciated that the selection of node I as a source node and node J as a receiving node is arbitrary. In actuality, both nodes can send and receive datagrams, and there are many nodes coupled to numerous private networks in communication over the Internet 30.

The present invention begins with the source node I sending a datagram in unencrypted form over private network 32 to the firewall FWA. Upon initialization IP source firewall FWA is provided with a secret value a, and computes a public value α^{a} mod p. Similarly, firewall FWB is provided with a secret value b, and computes a public value α^{b} mod p. For purposes of illustration, assume that node I wishes to communicate with a node J coupled to private network 40. As previously described with reference to **Figures 3** and **4** (where K_{ab} corresponds to Kᵢⱼ), K_{ab} need not be sent in every packet or negotiated out-of-band. Simply by examining the source of an IP packet, the destination IP firewall (for example, FWA) can compute the shared secret K_{ab}. The key K_{ab} is derived from α^{ab} mod p by using the low order key-size bits of α^{ab} mod p.

As illustrated in the flow charts of **Figures 9** and **10**, the SKIP protocol then utilizes the key K_{ab} to encrypt a "transient key" which is referred to as Kₚ. The transient key Kₚ is a randomly generated value which is configurable for use with a predefined number of bytes. Once the key Kₚ has been used for the predefined number of bytes, the key Kp is changed to enhance security. The encrypted transient key Kₚ is used to encrypt the received data packet from node I, or a collection of IP data packets. The encryption using Kₚ limits the amount of data in the long-term key which a potential cracker can access. In the preferred embodiment of the invention, only the transient keys of the long-term key are encrypted using K_{ab}, and the transient keys are used to encrypt IP data traffic.

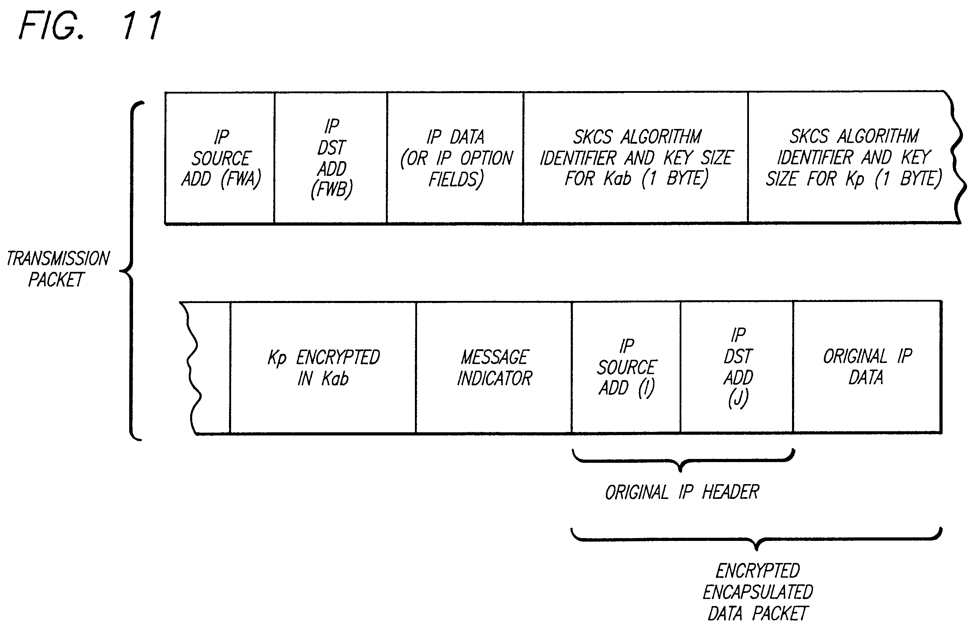

The first time the IP firewall, such as firewall FWA, which has been provided with the secret value a, communicates with the firewall FWB which has been provided with a secret value b, the firewall FWA computes the shared secret α^{ab} mod p. The firewall FWA can then cache this shared secret as the long-term key K_{ab}. FWA then generates a random key Kₚ and encrypts this key using K_{ab}. As illustrated in flow chart of **Figure 7**, FWA encrypts the IP packet in key Kₚ including the original IP header and data. The firewall FWA then encapsulates the encrypted IP packet in a transmission packet of the form illustrated in **Figure 11**. The outer IP header of the transmission packet specifies the protocol type for the contents of the outer header. The firewall FWA then transmits the transmission packet over the Internet 30 to the receiving firewall FWB.

It will be appreciated that to prepare the transmission packet illustrated in **Figure 11** for transmission on the outbound side of FWA, no communication was necessary with the receiving firewall FWB. In addition, since K_{ab} is used as the key for the SKCS, the length of the encrypted key Kₚ is the block size of a shared-key cipher (typically 8 bytes), as opposed to the block size of a public-key cipher (typically 64-128 bytes), which would have been the case if RSA certificates had been used in conjunction with in-band signalling of the packet encryption key.

As shown in **Figure 10**, when firewall FWB receives the transmission packet, FWB also computes the shared secret K_{ab} and caches it for later use. Using K_{ab} it obtains Kₚ. Firewall FWB removes the encrypted data packet from the transmission packet and decrypts the encrypted data, which it then delivers to the appropriate local transport entity in private network 30 for delivery to node J.

If the firewall FWA decides to change the packet encryption key Kₚ, the receiving firewall FWB can discover this fact without having to perform a public-key operation. The receiving firewall FWB uses the cached value K_{ab} to decrypt the encrypted packet key Kₚ, and this is a shared-key cryptosystem operation. Thus, without requiring communication between transmitting (FWA) and receiving (FWB) ends, and without necessitating the use of a public-key operation, the packet encrypting key can be changed by the transmitting side.

The firewalls FWA and FWB have no public-key signature algorithm. It will be appreciated that the lack of a public-key signature algorithm is not a major issue, since signing each packet using a public-key cryptosystem is too cumbersome in any case. In accordance with the present invention, the integrity of the packets is determined in a pair-wise fashion using a SKCS.

Since the K_{ab} values need to be cached for efficiency, reasonable safeguards need to be taken to protect these keys. One possible way to accomplish caching is to provide a hardware device to compute, store and perform operations using these keys. This device can ensure that there are no interfaces to extract the key from the device. It is contemplated that such a hardware device may be incorporated within the CPU block 13 illustrated in **Figure 1**.

In as much as the firewalls only have DH public keys, which have no signature capability, the firewalls themselves are unable to issue DH certificates. The firewall certificates are issued by organizational CAs which have jurisdiction over the range of IP addresses that are being certified. The PCAs will have to perform suitable checks (in line with the policy of that PCA), to confirm that the organization which has jurisdiction over a range of addresses is issued a certificate giving it the authority to certify the DH values of individual firewalls with those addresses. This authority may be delegated in the form of a authorization certificate signed by the PCA. For the purposes of authorization, the CA's Distinguished Name (DN) will be bound to the range of IP addresses over which it has jurisdiction. The CA has either an RSA or DSA certificate from the PCA. The CA which has authority over a range of IP addresses can delegate authority over part of the range to a subordinate CA, by signing another authorization certificate using its own private key. The organizational CA so authorized is identified by the range of addresses that it can issue certificates for. The range of IP addresses are identified in the certificate in the form of a IP address prefix.

However, since only the firewall machines participate in the key management protocol this embodiment of the present invention, there is a relatively small number of certificates that need to be managed. This is an advantage over the basic SKIP protocol as described previously in this Specification. For an organization simply communicating with its various subsidiaries over the Internet 30, the DH certificates may be signed by a few Certification Authorities (CAs) operated by the various sites. There can be as few as one CA per site for this purpose, or even one CA for the entire collection of sites.

### User Authentication

The application of the present invention to site firewalls is also described with reference to remote user authentication. The first remote user authentication application described herein is for the case where a user has a known IP address (and hence an assignable DH certificate). For example, when a user connects to an application or transport layer relay at a firewall machine, such as FWA, the application or transport layer relay creates an unsecured connection to the interior of the private network 32. The relay performs the user authentication. If we assume that the application supports password based authentication, which is true for most of the existing applications such as ftp, telnet, etc., then layering the password on top of an encrypted datagram substrate provides for strong user authentication, as described more fully below.

In accordance with the present invention, the login prompt is allowed to contain a randomly generated alphanumeric string. This random string is displayed in the clear to the user. The user enters the string in the password field, as well as his/her long-term password. The receiving computer checks to see if the string is properly present in the password field, and obtains the rest of the user password. This password is then checked using the regular password verification mechanism.

The present invention's authentication scheme has the following advantages. The password is only sent encrypted over the Internet, since it is going in an un-encrypted datagram from the remote node (I) to the firewall machine (FWA). By providing a random string in the login prompt, the user must enter a new string along with his/her password on every log-in attempt. This requirement effectively eliminates the possibility of encrypted datagram playback attacks. The password is used to provide user authentication, so even if a properly configured IP host is acquired by an intruder, the intruder cannot connect to a firewall machine without first entering a valid password.

It will be appreciated that the client application is simply given a login prompt, and the user is then asked to provide a response, similar to the client applications currently in place. This feature is a major advantage over the prior art, because by acting on the IP layer, the existing applications can automatically benefit, without having to modify software on a per client application basis. Furthermore, since all the IP packets are encrypted over the Internet, a variety of attacks, both passive and active are prevented, providing for a very high level of security, without necessitating modifications to the existing myriad client applications. Since the present invention is executed by firewalls, the only computers that need to implement the IP layer key-management scheme are the firewall machines. All the interior machines, such as nodes I and J in **Figure 6**, may continue to run the existing software.

### Remote User Operating with Dynamically Assigned IP Address

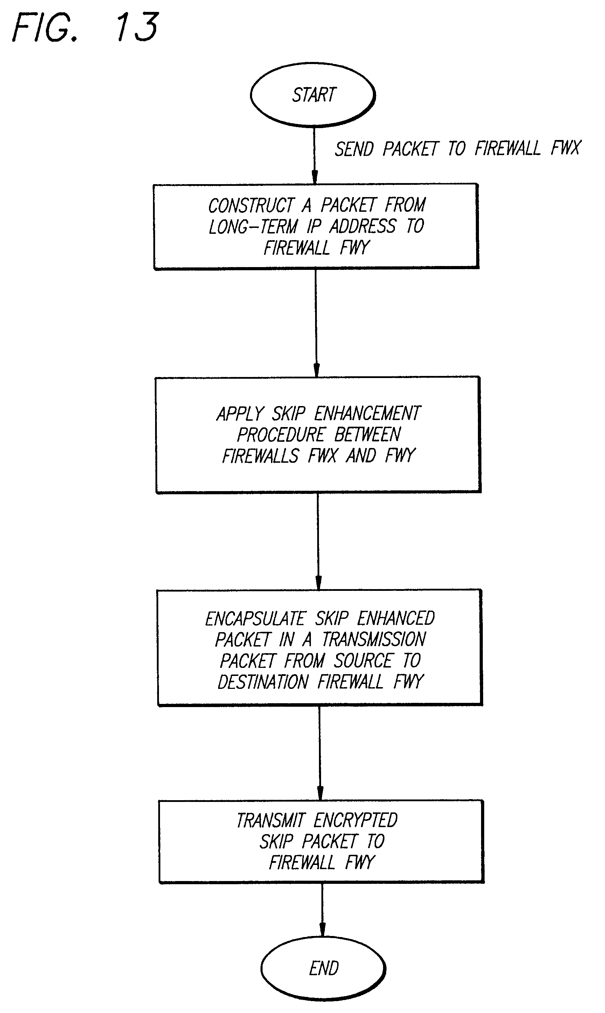

Referring now to **Figures 12** through **15**, the present invention will be described with reference to the case where IP addresses are dynamically assigned. In the previous section, it was assumed that the user was utilizing a known IP address. In other words, the IP address and its corresponding DH certificate can be made known to a particular firewall machine in advance. This would be the case if the user's computer uses a remote dial-up style link, or some other fixed topology scenario. This would also be the case if the user's computer uses one of the several mobile IP protocols which allow the machine to move around, and yet retain its IP address. (See, copending patent application entitled "A Scalable and Efficient Intra-Domain Tunneling Mobile-IP Scheme", Serial Number 08/128,838, filed September 29, 1993, and assigned to the Assignee of this patent, Sun Microsystems, Inc.).

However, if the user is carrying a portable computer and connects to a public network facility where the computer is dynamically assigned an IP address using a protocol such as the Dynamic Host Configuration Protocol (DHCP), the user's IP address is not known. In such event, the present invention utilizes a tunneling scheme in which instead of having cryptographic credentials associated with the outer IP address, the cryptographic credentials are associated with the inner IP address.

Referring now to **Figure 12**, there is shown an illustration of a mobile computer 49 ("mobile") having a long term IP address **M**, coupled to a network 50 at a temporary IP address IP_{d}. As illustrated, the network 50 is coupled to communicate over the Internet 30 through a firewall (FWX). Moreover, a second private network 52 is coupled to Internet 30 through a firewall (FWY). Assume, for purposes of explanation, that the mobile machine wishes to communicate with node R on the network 52, using the teachings of the present invention previously described with reference to **Figures 7** through **11**.

As shown in **Figure 13**, the mobile computer 49 prepares an outgoing (unencrypted) data packet as if the source IP address was the long-term IP address **M**, and so is configurable for cryptographic credentials and remote access. The remote machine 49 sends this data packet to the firewall FWA over network 50.

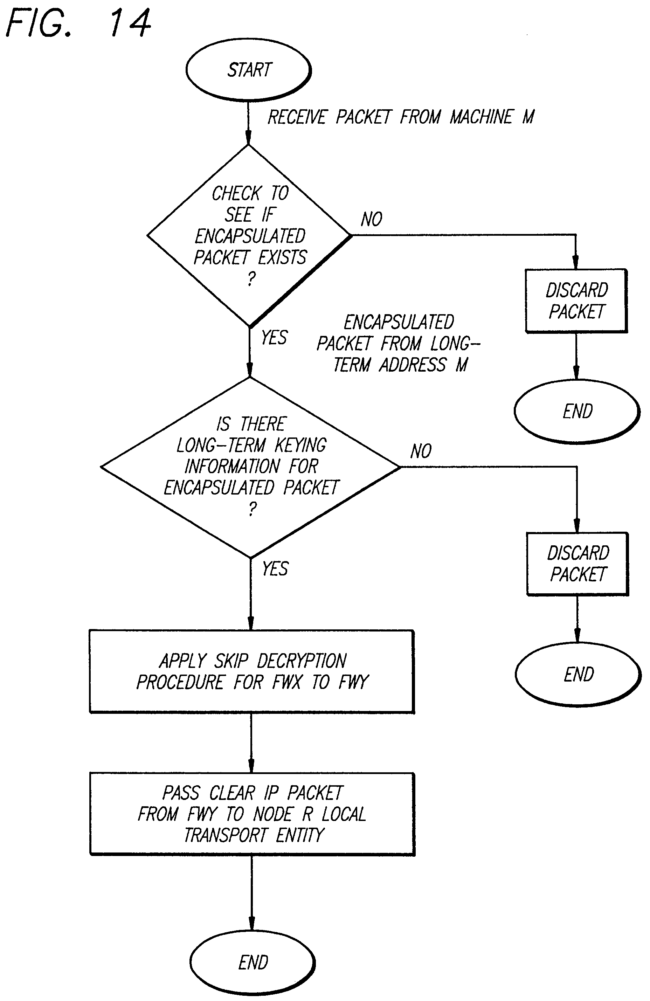

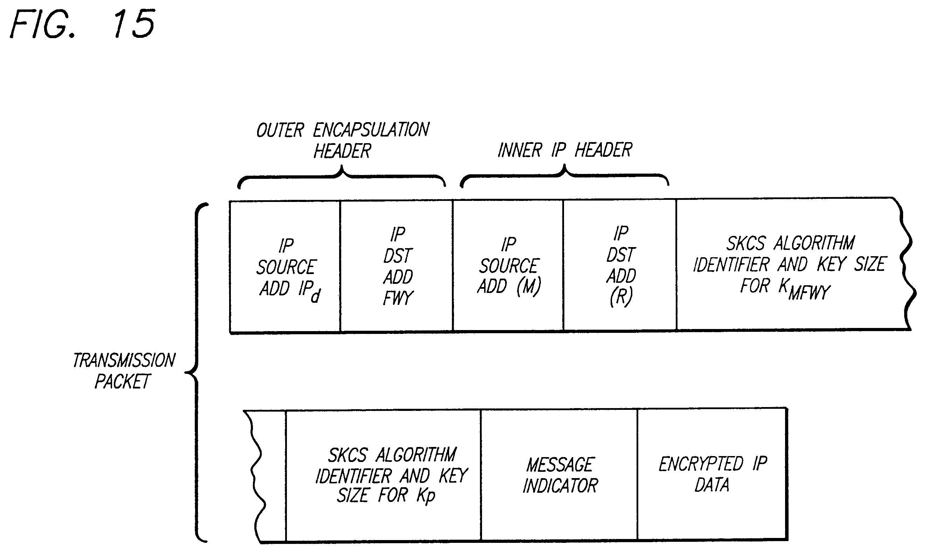

As provided in **Figure 14**, the firewall FWX receives the data packet and encrypts the IP data using the SKIP method described with reference to **Figures 7** through **11**. The encrypted IP packet is encapsulated in a transmission packet using the source IP address as the dynamically assigned IP_{d} address. The destination address is the address of the destination firewall (FWY). The form of the transmission packet and the encrypted encapsulated data packet is illustrated in **Figure 15**. Both the outer and inner IP header specifies an appropriate protocol type field for proper encapsulation and encryption processing. As provided in the flow chart of **Figure 14**, the firewall FWY receives the encapsulated IP packet and decrypts it using the SKIP scheme. The firewall FWY passes the decrypted data packet to the local transport entity of private network 52 in the clear to the destination node R.

The firewall FWY performs the same type of tunneling to send a data packet back to the mobile computer 49 with the dynamically assigned address. As will be appreciated, the node R first prepares an IP data packet intended for the long-term IP address (M), and forwards this packet to firewall FWY. The firewall FWY encrypts the data packet using SKIP, and encapsulates the data packet into a transmission packet intended for the transient dynamically assigned IP address (IP_{d}). The transient mapping between the long-term IP address (**M**) and the short term IP address (IP_{d}) by the firewall FWY lasts for the duration of the TCP connection that caused this binding.

Since in this Specification it is assumed there exists transport or application layer relaying, only the firewall FWY must be capable of handling this kind of tunneling. Moreover, the present invention may operate in the absence of firewall application or transport layer relaying, as long as the end machines implement the present invention's protocol.

Although the present invention has been described with reference to a few exemplary **Figures 1-15**, it will be apparent that many alternatives, modifications and variations may be made in light of the foregoing description.

## Claims

**1.** An improved method for a first data processing device (node I) to send data to a second data processing device (node J), comprising the steps of:
providing an element for performing the step of providing a secret value i, and a public value αⁱ mod p to said node I;
providing an element for performing the step of providing a secret value j, and a public value α^{j} mod p to said node J;
said node I including an element for performing the steps of:
obtaining a Diffie-Helman (DH) certificate for node J and determining said public value αⁱ mod p from said DH certificate;
computing the value of α^{ij} mod p, said node I further deriving a key Kᵢⱼ from said value α^{ij} mod p;
utilizing said key Kᵢⱼ to encrypt a randomly generated transient key Kₚ, and encrypting a data packet to be transmitted to node J using said key Kₚ;
providing an element for performing the step of said node I sending said data packet encrypted using said key Kₚ to said node J.

**2.** The method as defined by claim 1, further comprising the steps by said node J of:
providing an element for performing the step of receiving said data packet from node I;
providing an element for performing the step of obtaining a DH certificate for said node I and determining said public value αⁱ mod p from said DH certificate;
providing an element for performing the step of computing the value of α^{ij} mod p, said node J further deriving said key Kᵢⱼ from said value α^{ij} mod p;
providing an element for performing the step of utilizing said key Kᵢⱼ to decrypt the transient key Kₚ, and decrypting said received data packet using said transient key Kₚ;
whereby node J decrypts data received and previously encrypted by node I.

**3.** The method as defined by claim 2, wherein said key Kᵢⱼ is derived from α^{ij} mod p using low order bits of α^{ij} mod p.

**4.** The method as defined by claim 3, wherein the key Kᵢⱼ is an implicit pair wise secret used as a key for a shared key cryptosystem (SKCS).

**5.** The method as defined by claim 4, wherein said SKCS is DES.

**6.** The method as defined by claim 5, wherein said SKCS is RC2.

**7.** The method as defined by claim 4, wherein said data packet includes a source address, a destination address and in SKCS identifier field.

**8.** The method as defined by claim 7, wherein said data packet further includes a message indicator field.

**9.** The method as defined by claim 4, wherein α and p are system parameters, and where p is a prime number.

**10.** An apparatus for encrypting data for transmission from a first data processing device (node I) to a second data processing device (node J), comprising:
node I including a first storage device for storing a secret value i, and a public value αⁱ mod p;
node J including a second storage device for storing a secret value j, and a public value α^{j} mod p;
node I including an encrypting device for encrypting a data packet to be transmitted to node J, said data packet being encrypted using a first Diffie-Helman (DH) certificate for node J to determine said public value α^{j} mod p;
said encrypting device further computing the value of α^{ij} mod p and deriving a key Kᵢⱼ from said value α^{ij} mod p;
said encrypting device encrypting a randomly generated transient key Kₚ from Kᵢⱼ, and encrypting said data packet using said transient key Kₚ;
node I further including an interface circuit for transmitting said encrypted data packet to said node J.

**11.** The apparatus as defined by claim 10, wherein said node J further includes:
a receiver for receiving said encrypted data packet from node I;
a decrypting device coupled to said receiver for decrypting said data packet from node I.

**12.** The apparatus as defined by claim 11, wherein said decrypting device obtains a second DH certificate for said node I and determines said public value αⁱ mod p, and computes the value of α^{ij} mod p, said decrypting device further deriving said key Kᵢⱼ from α^{ij} mod p.

**13.** The apparatus as defined by claim 12, wherein said decrypting device utilizes said key Kᵢⱼ to decrypt said transient key Kₚ, and decrypts said received data packet using said transient key Kₚ.

**14.** The apparatus as defined by claim 13, wherein said key Kᵢⱼ is derived from α^{ij} mod p using low order bits of α^{ij} mod p.

**15.** The apparatus as defined by claim 14, wherein said key Kᵢⱼ is an implicit pair wise secret used as a key for a shared key cryptosystem (SKCS).

**16.** The apparatus as defined by claim 15, wherein said data packet includes a source address, a destination address and an SKCS identifier field.

**17.** The apparatus as defined by claim 16, wherein said data packet further includes a message indicator field.

**18.** The apparatus as defined by claim 17, wherein α and p are system parameters, and where p is a prime number.

**19.** The apparatus as defined by claim 15, wherein said SKCS is DES.

**20.** The apparatus as defined by claim 15, where said SKCS is RC2.

**21.** In a network including a first data processing device (node I) coupled to a first firewall server (FWA) and a second data processing device (node J) coupled to a second firewall server (FWB), said first and second firewall servers disposed between said respective nodes I and J and said network, an improved method for sending data from said node I to said node J, comprising the steps of:
providing an element for performing the step of said node I sending a data packet, including data and a destination address for node J, to said FWA;
providing an element for performing the step of providing a secret value a, and a public value α^{a} mod p to said FWA;
providing an element for performing the step of providing a secret value b, and a public value α^{b} mod p to said FWB;
said FWA performing the steps of:
adapting FWA for obtaining a Diffie-Hellman (DH) certificate for FWB and determining said public value α^{b} mod p from said DH certificate;
said firewall FWA computing the value of α^{ab} mod p, said FWA further deriving a key K_{ab} from said value α^{ab} mod p;
said firewall FWA utilizing said key K_{ab} to encrypt a randomly generated transient key Kₚ, and encrypting said data packet to be transmitted to FWB using said key Kₚ, said encrypted data packet being encapsulated in a transmission packet including an unencrypted destination address for FWB;
said FWA sending said transmission packet to said FWB.

**22.** The method as defined by claim 21, further comprising the steps by said FWB of:
providing an element for performing the step of receiving said transmission packet from FWA and decapsulating said data packet from said transmission packet;
providing an element for performing the step of obtaining a DH certificate for said FWA and determining said public value α^{a} mod p from said DH certificate;
providing an element for performing the step of computing the value of α^{ab} mod p, said FWB further deriving said key K_{ab} from said value α^{ab} mod p;
providing an element for performing the step of utilizing said key K_{ab} to decrypt said transient key Kₚ, and decrypting said received encrypted data packet using said transient key Kₚ;
providing an element for performing the step of sending said decrypted data packet to said node J;
whereby FWB decrypts data received and previously encrypted by FWA, and sends said decrypted data to said node J.

**23.** The method as defined by claim 22, wherein said FWB sends said received data packet to said node J using said decrypted destination address in said decrypted data packet.

**24.** The method as defined by claim 24, wherein said key K_{ab} is derived from α^{ab} mod p using low order bits of α^{ab} mod p.

**25.** The method as defined by claim 24, wherein the key K_{ab} is an implicit pair wise secret used as a key for a shared key cryptosystem (SKCS).

**26.** The method as defined by claim 25, wherein α and p are system parameters, and where p is a prime number.

**27.** The method as defined by claim 26, wherein said transmission packet further includes a source address identifying the source of said transmission packet as FWA, and an SKCS identifier field.

**28.** A network including a first data processing device (node I) coupled to a first firewall server (FWA) and a second data processing device (node J) coupled to a second firewall server (FWB), said first and second firewall servers disposed between said respective nodes I and J and said network, comprising:
node I including a transmission device for sending a data packet, having data and a destination address for node J, to said FWA;
FWA including a first storage device for storing a secret value a, and a public value α^{a} mod p;
FWB including a second storage device for storing a secret value b, and a public value α^{b} mod p;
FWA including an encrypting device for encrypting said data packet to be transmitted to FWB, said data packet being encrypted by using a first Diffie-Hellman (DH) certificate for FWB to determine said public value α^{b} mod p, and
said encrypting device further computing the value of α^{ab} mod p and deriving a key K_{ab} from said value α^{ab} mod p;
said encrypting device encrypting a randomly generated transient key Kₚ from K_{ab}, and encrypting said data packet using said transient key Kₚ;
said encrypted data packet being encapsulated in a transmission packet, said transmission packet including an unencrypted destination address for FWB;
FWA further including an interface circuit for transmitting said transmission packet to said FWB over said network.

**29.** The network as defined by claim 28, wherein said FWB further includes:
a receiver for receiving said transmission packet from FWA and decapsulating said data packet from said transmission packet; and
a decrypting device coupled to said receiver for decrypting said data packet.

**30.** The network as defined by claim 29, wherein said decrypting device obtains a second DH certificate for said FWA and determines said public value α^{a} mod p, and computes the value of α^{ab} mod p, said decrypting device further deriving said key K_{ab} from α^{ab} mod p.

**31.** The network as defined by claim 30, wherein said decrypting device utilizes said key K_{ab} to decrypt said transient key Kₚ, and decrypts said data packet using said transient key Kₚ.

**32.** The network as defined by claim 31, wherein said key K_{ab} is derived from α^{ab} mod p using low order bits of α^{ab} mod p.

**33.** The network as defined by claim 32, wherein said key K_{ab} is an implicit pair wise secret used as a key for a shared key cryptosystem (SKCS).

**34.** The network as defined by claim 33, wherein α and p are system parameters, and where p is a prime number.

**35.** In a network including a mobile data processing device (device M) having a long term address M and a temporary address IP_{d}, said device **M** coupled to a first firewall server (FWX), and a second data processing device (device R) coupled to a second firewall server (FWY), said first and second firewall servers disposed between said respective devices **M** and R, an improved method for sending data from said device **M** to said device R, comprising the steps of:
said device **M** sending a data packet, including data, a destination address for device R, and said long term address **M** to said firewall FWX;
providing a secret value x, and a public value α^{x} mod p to said FWX;
providing a secret value y, and a public value α^{y} mod p to said FWY;
said FWX performing the steps of:
obtaining a Diffie-Hellman (DH) certificate for FWY and determining said public value α^{y} mod p from said DH certificate;
computing the value of α^{xy} mod p, said FWX further deriving a key K_{xy} from said value α^{xy} mod p;
utilizing said key K_{xy} to encrypt a randomly generated transient key Kₚ, and encrypting said data packet to be transmitted to FWY using said key Kₚ,
said encrypted data packet being encapsulated in a transmission packet including an unencrypted destination address for FWY and said temporary address IP_{d} as a source address;
said FWX sending said transmission packet to said FWY.

**35.** The method as defined by claim 35, further comprising the steps by said FWY of:
receiving said transmission packet from FWX and decapsulating said data packet from said transmission packet;
obtaining a DH certificate for said FWX and determining said public value α^{x} mod p from said DH certificate;
computing the value of α^{xy} mod p, said FWY further deriving said key K_{xy} from said value α^{xy} mod p;
utilizing said key K_{xy} to decrypt said transient key Kₚ, and decrypting said received encrypted data packet using said transient key Kₚ;
sending said decrypted data packet to said device R;
whereby FWY decrypts data received and previously encrypted by FWX, and sends said decrypted data to said device R.

**37.** The method as defined by claim 36, wherein said key K_{xy} is derived from α^{xy} mod p using low order bits of α^{xy} mod p.

**38.** The method as defined by claim 37, wherein the key K_{xy} is an implicit pair wise secret used as a key for a shared key cryptosystem (SKCS).

**39.** The method as defined by claim 38, wherein α and p are system parameters, and where p is a prime number.

**40.** A network including a mobile data processing device (device **M**) having a long term address **M** and a temporary address on said network IP_{d}, said device **M** coupled to a first firewall server (FWX) and a second data processing device (device R) coupled to a second firewall server (FWY), said first and second firewall servers disposed between said respective devices **M** and R, comprising:
device **M** including a transmission device for sending a data packet, including data, and a destination address for device R, and said long term address **M** to said firewall FWX;
FWX including a first storage device for storing a secret value x, and a public value α^{x} mod p;
FWY including a second storage device for storing a secret value y, and a public value α^{y} mod p;
FWX including an encrypting device for encrypting said data packet to be transmitted to FWY, said data packet being encrypted by using a first Diffie-Hellman (DH) certificate for FWY to determine said public value α^{y} mod p, and said encrypting device further
computing the value of α^{xy} mod p and deriving a key K_{xy} from said value α^{xy} mod p;
said encrypting device encrypting a randomly generated transient key Kₚ and encrypting said data packet using said transient key Kₚ;
said encrypted data packet being encapsulated in a transmission packet, including an unencrypted destination address for FWY and said temporary address IP_{d} as a source address;
FWX further including an interface circuit for transmitting said transmission packet to said FWY over said network.

**41.** The network as defined by claim 40, wherein said FWY further includes:
a receiver for receiving said transmission packet from FWX and decapsulating said data packet from said transmission packet;
a decrypting device coupled to said receiver for decrypting said data packet.

**42.** The network as defined by claim 41, wherein said decrypting device obtains a second DH certificate for said FWX and determines said public value α^{x} mod p, and computes the value of α^{xy} mod p, said decrypting device further deriving said key K_{xy} from α^{xy} mod p.

**43.** The network as defined by claim 41, wherein said decrypting device utilizes said key K_{xy} to decrypt said transient key Kₚ, and decrypts said data packet using said transient key Kₚ.

**44.** The network as defined by claim 41, wherein said key K_{xy} is derived from α^{xy} mod p using low order bits of α^{xy} mod p.
